# EUROPÄISCHE PATENTSCHRIFT

(11) **EP 4 176 472 B1**
(45) Veröffentlichungstag und Bekanntmachung des Hinweises auf die Patenterteilung: **13.12.2023**
(21) Anmeldenummer: 20736664.2
(22) Anmeldetag: 02.07.2020
(51) Int. Cl.: H01M 4/04, H01M 4/134, H01M 4/1395, H01M 4/36, H01M 4/38, H01M 4/62, H01M 10/0525, H01M 4/02

(54) **VERFAHREN ZUR HERSTELLUNG VON KOHLENSTOFF-BESCHICHTETEN SILICIUMPARTIKEL FÜR LITHIUMIONEN- BATTERIEN**
METHOD FOR PRODUCING CARBON-COATED SILICON PARTICLES FOR LITHIUM-ION BATTERIES
PROCÉDÉ DE PRODUCTION DE PARTICULES DE SILICIUM REVÊTUES DE CARBONE POUR BATTERIES AU LITHIUM-ION

(43) Veröffentlichungstag der Anmeldung: 10.05.2023
(73) Patentinhaber: Wacker Chemie AG, 81737 München (DE)
(72) Erfinder: HAUFE, Stefan, 85579 Neubiberg (DE); DRÄGER, Christoph, 81369 München (DE); WEGENER, Jennifer, 80538 München (DE)
(74) Vertreter: Ege, Markus
(86) Internationale Anmeldenummer: PCT/EP2020/068651
(87) Internationale Veröffentlichungsnummer: WO 2022/002404

(56) Entgegenhaltungen:
- WO-A1-2018/145733
- DE-A1-102016 203 349
- DE-A1-102016 221 782
- "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf [retrieved on 2018-05-09]
- Thomas: "GPC/SEC Practical Tips and Tricks", , 1 October 2011 (2011-10-01), XP055608344, Retrieved from the Internet: URL:https://www.agilent.com/cs/library/sli depresentation/Public/GCC2011-Wksp_GPC_Tip s-and-Tricks_Presentation.pdf [retrieved on 2019-07-24]

## Beschreibung

Die Erfindung betrifft Verfahren zur Herstellung von Kohlenstoff-beschichteten Siliciumpartikeln, so erhältliche Kohlenstoff-beschichtete Siliciumpartikel sowie Verfahren zur Herstellung von Lithium-Ionen-Batterien.

Wiederaufladbare Lithium-Ionen-Batterien sind momentan die kommerziell verfügbaren elektrochemischen Energiespeicher mit der höchsten spezifischen Energie von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere Reichweiten der Fahrzeuge zu erreichen. Als negatives Elektrodenmaterial ("Anode") wird in der Praxis gegenwärtig vor allem graphitischer Kohlenstoff verwendet. Nachteilig ist jedoch seine relativ niedrige elektrochemische Kapazität von theoretisch 372 mAh/g, die nur etwa einem Zehntel der mit Lithiummetall theoretisch erreichbaren elektrochemischen Kapazität entspricht. Die höchste bekannte Speicherkapazität für Lithium-Ionen besitzt Silicium, nämlich 4199 mAh/g.

Nachteiligerweise erleiden Silicium enthaltende Elektrodenaktivmaterialien beim Laden bzw. Entladen mit Lithium extreme Volumenänderungen von bis ungefähr 300%, was zu einer starken mechanischen Beanspruchung des Aktivmaterials und der gesamten Elektrodenstruktur führt und auch als elektrochemisches Mahlen bezeichnet wird und zu einem Verlust der elektrischen Kontaktierung und damit zur Zerstörung der Elektrode unter Kapazitätsverlust führt. Ein weiteres Problem besteht darin, dass die Oberfläche des Silicium-Anodenmaterials mit Bestandteilen des Elektrolyten reagiert unter Bildung passivierender Schutzschichten (Solid Electrolyte Interphase; SEI), was zu einem irreversiblen Verlust an mobilem Lithium und somit zu Kapazitätsverlust führt.

Um solchen Problemen entgegenzutreten, wurden in einer Reihe von Schriften Kohlenstoff-beschichtete Siliciumpartikel als Aktivmaterial für Anoden von Lithiumionen-Batterien empfohlen. So beschreibt Liu, Journal of The Electrochemical Society, 2005, 152 (9), Seiten A1719 bis A1725 Kohlenstoff-beschichtete Siliciumpartikel mit einem Kohlenstoffanteil von 27 Gew.-%. Mit 20 Gew.-% Kohlenstoff beschichtete Siliciumpartikel werden von Ogumi beschrieben im Journal of The Electrochemical Society, 2002, 149 (12), Seiten A1598 bis A1603. In JP2002151066 ist ein Kohlenstoffanteil von 11 bis 70 Gew.-% für Kohlenstoff-beschichtete Siliciumpartikel angegeben. Die beschichteten Partikel von Yoshio, Chemistry Letters, 2001, Seiten 1186 bis 1187, enthalten 20 Gew.-% Kohlenstoff und eine durchschnittliche Partikelgröße von 18 µm. Die Schichtdicke der Kohlenstoffbeschichtung beträgt 1,25 µm. Aus der Veröffentlichung von N.-L. Wu, Electrochemical and Solid-State Letters, 8 (2), 2005, Seiten A100 bis A103, sind Kohlenstoff-beschichtete Siliciumpartikel mit einem Kohlenstoffanteil von 27 Gew.-% bekannt.

Die JP2004-259475 lehrt Verfahren zum Beschichten von Siliciumpartikeln mit Nichtgraphitkohlenstoffmaterial und gegebenenfalls Graphit sowie anschließendem Carbonisieren, wobei der Prozesszyklus aus Beschichten und Carbonisieren mehrfach wiederholt wird. Zudem lehrt die JP2004-259475, das Nichtgraphitkohlenstoffmaterial und etwaigen Graphit in Form einer Suspension für die Oberflächenbeschichtung einzusetzen. Solche Verfahrensmaßnahmen führen bekanntermaßen zu aggregierten Kohlenstoff-beschichteten Siliciumpartikeln. Auch in der US8394532 erfolgte die Herstellung von Kohlenstoff-beschichteten Siliciumpartikeln aus einer Dispersion. Für das Ausgangsmaterial sind 20 Gew.-% Kohlefasern angegeben, bezogen auf Silicium.

Die EP1024544 befasst sich mit Siliciumpartikeln, deren Oberfläche vollständig mit einer Kohlenstoffschicht bedeckt ist. Konkret sind aber nur aggregierte Kohlenstoff-beschichtete Siliciumpartikel offenbart, wie die Beispiele anhand der durchschnittlichen Partikeldurchmesser von Silicium und der Produkte veranschaulichen. Die EP2919298 lehrt Verfahren zur Herstellung von Kompositen durch Pyrolisieren von Mischungen enthaltend Siliciumpartikel und zum überwiegenden Teil Polymere und anschließendes Mahlen, was aggregierte Partikel impliziert. Die US2016/0104882 hat Kompositmaterialien zum Gegenstand, in denen eine Vielzahl von Siliciumpartikeln in eine Kohlenstoffmatrix eingebettet sind. Damit liegen die einzelnen Kohlenstoff-beschichteten Siliciumpartikel in Form von Aggregaten vor. Die WO2018/229515 beschreibt Verfahren zur Herstellung von Kompositpartikeln, in denen Siliciumpartikel mit durchschnittlichen Partikeldurchmessern d₅₀ von 20 bis 500 nm und Stickstoff- oder Sauerstoff-Atome enthaltende Kohlenstoff-Prekursoren in einem Lösungsmittel dispergiert werden und anschließend getrocknet, gegebenenfalls zunächst bei 200 bis 400°C thermisch behandelt und abschließend pyrolisiert wird unter Bildung der Si/C-Kompositpartikel mit Durchmessern von 1 bis 25 µm.

Die US2009/0208844 beschreibt Siliciumpartikel mit einer Kohlenstoffbeschichtung enthaltend elektrisch leitfähiges, elastisches Kohlenstoffmaterial, konkret expandierten Graphit. Damit sind Siliciumpartikel offenbart, an deren Oberfläche expandierte Graphitpartikel mittels einer Kohlenstoffbeschichtung partikulär angebunden sind. Verfahrenstechnische Anhaltspunkte zur Herstellung von nicht-aggregierten, Kohlenstoff-beschichteten Siliciumpartikel sind der US2009/0208844 nicht entnehmbar. Die US2012/0100438 beinhaltet poröse Siliciumpartikel mit Kohlenstoffbeschichtung, allerdings ohne konkrete Angaben zur Herstellung der Beschichtung und die Kohlenstoff- und Silicium-Anteile der Partikel zu machen.

Die WO2018/082880 lehrt zur Beschichtung von Siliciumpartikeln mit Kohlenstoff Trockenverfahren, in denen Mischungen aus Siliciumpartikeln und schmelzbaren Kohlenstoff-Precursoren bis zum vollständigen Schmelzen der Kohlenstoff-Precursoren auf eine Temperatur von unter 400°C erwärmt werden und anschließend carbonisiert wird; oder alternativ CVD-Verfahren (Chemical-Vapor-Deposition, chemische Gasphasenabscheidung). Als Kohlenstoff-Precursoren für das Trockenverfahren werden konkret Saccharide, Polyanilin, Polystyrol, Polyacrylnitril oder Pech genannt. Sowohl das Aufschmelzen und zudem das Carbonisieren wird konkret unter anaeroben Bedingungen durchgeführt. Die PCT/EP2020/057362 (Anmeldenummer) beschreibt das Beschichten von Siliciumpartikeln mit Kohlenstoff unter Einsatz von Polyacrylnitril als Kohlenstoff-Precursor.

In EP1054462 werden Anoden hergestellt, indem Stromkollektoren mit Siliciumpartikeln und Bindemitteln beschichtet werden und anschließend carbonisiert wird.

Weiterer relevanter Stand der Technik kann den Patentschriften DE 10 2016 221782 A1, die ein Verfahren zur Herstellung von nicht-aggregierten Kohlenstoff-beschichteten Siliciumpartikel mit durchschnittlichen Partikeldurchmessern d50 von 1 bis 15 µm offenbart, DE 10 2016 203349 A1, die sich auf ein Verfahren zur Herstellung von Präkompositpartikeln mittels Sprühtrocknung von Polymeren und Siliciumpartikel enthaltenden Zusammensetzungen bezieht und WO 2018/145733 A1, die ein Kern-Schale-Kompositpartikel offenbart, entnommen werden.

Vor diesem Hintergrund bestand weiterhin die Aufgabe, Siliciumpartikel als Aktivmaterial für Anoden von Lithiumionen-Batterien so zu modifizieren, dass die entsprechenden Lithium-Ionen-Batterien hohe initiale reversible Kapazitäten und zudem in den Folgezyklen ein stabiles elektrochemisches Verhalten mit möglichst geringem Rückgang der reversiblen Kapazität (Fading) aufweisen.

Ein Gegenstand der Erfindung sind Verfahren zur Herstellung von nicht-aggregierten Kohlenstoff-beschichteten Siliciumpartikeln, die durchschnittliche Partikeldurchmesser d₅₀ von 1 bis 15 µm haben sowie ≤ 10 Gew.-% Kohlenstoff und ≥ 90 Gew.-% Silicium enthalten, jeweils bezogen auf das Gesamtgewicht der Kohlenstoff-beschichteten Siliciumpartikel, indem Trockenmischungen enthaltend Siliciumpartikel und ein oder mehrere polymere Kohlenstoff-Precursoren, die ein oder mehrere Sauerstoffatome und ein oder mehrere Heteroatome ausgewählt aus der Gruppe umfassend Stickstoff, Schwefel und Phosphor enthalten,
in oxidativer Atmosphäre bei einer Temperatur von 200 bis 400°C behandelt werden (thermische Behandlung), und anschließend unter inerter Atmosphäre carbonisiert wird, gemäß dem unabhängigen Anspruch 1.

Ein weiterer Gegenstand der Erfindung sind nicht-aggregierte Kohlenstoff-beschichtete Siliciumpartikel, die durchschnittliche Partikeldurchmesser d₅₀ von 1 bis 15 µm haben und ≤ 10 Gew.-% Kohlenstoff und ≥ 90 Gew.-% Silicium enthalten, jeweils bezogen auf das Gesamtgewicht der Kohlenstoff-beschichteten Siliciumpartikel, erhältlich nach dem erfindungsgemäßen Verfahren, gemäß dem unabhängigen Anspruch 13.

Die erfindungsgemäßen nicht-aggregierten Kohlenstoff-beschichteten Siliciumpartikel werden im Folgenden auch abgekürzt als Kohlenstoff-beschichtete Siliciumpartikel bezeichnet.

Um erfindungsgemäße Kohlenstoff-beschichtete Siliciumpartikel gewinnen zu können, erwies es sich als wesentlich, die erfindungsgemäßen Trockenmischungen erfindungsgemäß zu behandeln.

Überraschenderweise sind erfindungsgemäß Kohlenstoff-beschichteten Siliciumpartikel erhältlich, die nicht aggregiert sind. Ein Verkleben oder Versintern und damit eine Aggregierung unterschiedlicher Partikel trat überraschenderweise nicht oder zumindest nicht in nennenswertem Umfang auf. Dies war umso überraschender, da die polymeren Kohlenstoff-Precursoren während der Carbonisierung üblicherweise in flüssiger oder pastöser Form vorliegen und als Klebstoff fungieren können, was nach Abkühlen oder Carbonisieren zu einem Zusammenbacken der Partikel und damit zu aggregierten Produkten führen kann. Überraschenderweise wurden erfindungsgemäß dennoch nicht-aggregierte Kohlenstoff-beschichtete Siliciumpartikel erhalten.

Die Kohlenstoff-beschichteten Siliciumpartikel liegen vorzugsweise in Form von isolierten Partikeln oder lockeren Agglomeraten vor, jedoch nicht in Form von Aggregaten von Kohlenstoff-beschichteten Siliciumpartikeln. Agglomerate sind Zusammenballungen von mehreren Kohlenstoff-beschichteten Siliciumpartikeln. Aggregate sind Zusammenlagerungen von Kohlenstoff-beschichteten Siliciumpartikeln. Agglomerate lassen sich in die einzelnen Kohlenstoff-beschichteten Siliciumpartikel separieren, beispielsweise mit Knet- oder Dispergierverfahren. Aggregate lassen sich auf diese Weise nicht in die einzelnen Partikel trennen, ohne Kohlenstoff-beschichtete Siliciumpartikel zu zerstören. Dies schließt jedoch für Einzelfälle nicht aus, dass im erfindungsgemäßen Verfahren zu geringem Anteil aggregierte Kohlenstoff-beschichtete Siliciumpartikel gebildet werden.

Das Vorliegen von Kohlenstoff-beschichteten Siliciumpartikeln in Form von Aggregaten kann beispielsweise mittels Raster-Elektronen-Mikroskopie (REM) oder Transmissions-Elektronen-Mikroskopie (TEM) sichtbar gemacht werden. Besonders geeignet ist hierzu ein Vergleich von REM-Aufnahmen beziehungsweise TEM-Aufnahmen der unbeschichteten Siliciumpartikel mit entsprechenden Aufnahmen der Kohlenstoff-beschichteten Siliciumpartikel. Statische Lichtstreuungsmethoden zur Bestimmung der Teilchengrößenverteilungen oder Partikeldurchmesser sind alleine nicht geeignet, das Vorliegen von Aggregaten zu ermitteln. Wenn die Kohlenstoff-beschichteten Siliciumpartikel jedoch im Rahmen der Messgenauigkeit signifikant größere Partikeldurchmesser haben als die zu deren Herstellung eingesetzten Siliciumpartikel, so ist dies ein Hinweis auf das Vorliegen von aggregierten Kohlenstoff-beschichteten Siliciumpartikeln. Besonders bevorzugt werden die vorgenannten Bestimmungsmethoden in Kombination eingesetzt.

Die Kohlenstoff-beschichteten Siliciumpartikel weisen einen Aggregationsgrad von bevorzugt ≤ 40%, besonders bevorzugt ≤ 30% und am meisten bevorzugt ≤ 20% auf. Bestimmt wird der Aggregationsgrad durch eine Siebanalyse. Der Aggregationsgrad entspricht allgemein dem Prozentsatz der Partikel, die nach Dispersion in Ethanol bei gleichzeitiger Ultraschallbehandlung nicht durch ein Sieb mit einer Maschenweite des doppelten d₉₀-Wertes der volumengewichteten Partikelgrößenverteilung der jeweiligen zu untersuchenden Partikel-Zusammensetzung, insbesondere nicht durch ein Sieb mit einer Maschenweite von 20 µm hindurch treten.

Die Differenz aus den volumengewichteten Partikelgrößenverteilungen d₅₀ der Kohlenstoff-beschichteten Siliciumpartikel und der als Edukt eingesetzten Siliciumpartikel ist auch ein Indikator dafür, dass die Kohlenstoff-beschichteten Siliciumpartikel nicht aggregiert sind. Die Differenz aus der volumengewichteten Partikelgrößenverteilung d₅₀ der Kohlenstoff-beschichteten Siliciumpartikel und der volumengewichteten Partikelgrößenverteilung d₅₀ der als Edukt zur Herstellung der Kohlenstoff-beschichteten Siliciumpartikel eingesetzten Siliciumpartikel beträgt vorzugsweise ≤ 5 µm, besonders bevorzugt ≤ 3 µm und am meisten bevorzugt ≤ 2 µm.

In Folge des erfindungsgemäßen Einsatzes der erfindungsgemäßen Kohlenstoff-Precursoren und der oxidativen Atmosphäre bei der thermischen Behandlung unterscheiden sich die erfindungsgemäßen Kohlenstoff-beschichteten Siliciumpartikel strukturell von herkömmlichen Kohlenstoff-beschichteten Siliciumpartikeln. Dies äußert sich beispielsweise auch beim Einsatz der erfindungsgemäßen Kohlenstoff-beschichteten Siliciumpartikel als Anodenaktivmaterial in Lithium-Ionen-Batterien in der dabei festgestellten verbesserten Zyklisierungsstabilität, die nur mit besonderen strukturellen Eigenschaften des Anodenaktivmaterials erklärbar ist. Ohne an eine Theorie gebunden zu sein, können diese Effekte durch spezielle Gehalte an Sauerstoff- oder Heteroatomen oder spezielle Sauerstoff- oder Heteroatome enthaltende funktionelle Gruppen oder Spezies in den Kohlenstoff-beschichteten Siliciumpartikeln bewirkt sein, die von den erfindungsgemäßen Kohlenstoff-Precursoren oder der oxidativen Atmosphäre bei der erfindungsgemäßen thermischen Behandlung der Trockenmischungen herrühren. Solche Sauerstoff- oder Heteroatome können beispielsweise die Kohäsion innerhalb der Kohlenstoffbeschichtung oder die Adhäsion der Kohlenstoffbeschichtung auf den Siliciumpartikeln verbessern oder deren Elastizität steigern, beispielsweise über Van-der-Waals-Wechselwirkungen, Wasserstoffbrückenbindungen, ionische Wechselwirkungen oder insbesondere kovalente Bindungen.

Die Kohlenstoff-beschichteten Siliciumpartikel haben volumengewichtete Partikelgrößenverteilungen mit Durchmesser-Perzentilen d₅₀ von vorzugsweise ≥ 2 µm, besonders bevorzugt ≥ 3 µm und am meisten bevorzugt ≥ 4 µm. Die Kohlenstoff-beschichteten Siliciumpartikel haben d₅₀-Werte von vorzugsweise ≤ 10 µm, besonders bevorzugt ≤ 8 µm und am meisten bevorzugt ≤ 6 µm.

Die Kohlenstoff-beschichteten Siliciumpartikel haben volumengewichtete Partikelgrößenverteilungen mit d₉₀-Werten von vorzugsweise ≤ 40 µm, besonders bevorzugt d₉₀ ≤ 30 µm und ganz besonders bevorzugt d₉₀ ≤ 10 µm.

Die Kohlenstoff-beschichteten Siliciumpartikel haben volumengewichtete Partikelgrößenverteilungen mit d₁₀-Werten von vorzugsweise ≥ 0,5 µm, besonders bevorzugt d₁₀ ≥ 1 µm und am meisten bevorzugt d₁₀ ≥ 1,5 µm.

Die Partikelgrößenverteilung der Kohlenstoff-beschichteten Siliciumpartikel kann bimodal oder polymodal sein und ist bevorzugt monomodal, besonders bevorzugt schmal. Die volumengewichtete Partikelgrößenverteilung der Kohlenstoff-beschichteten Siliciumpartikel hat eine Breite (d₉₀-d₁₀) /d₅₀ von bevorzugt ≤ 3, mehr bevorzugt ≤ 2,5, besonders bevorzugt ≤ 2 und am meisten bevorzugt ≤ 1,5.

Die Bestimmung der volumengewichteten Partikelgrößenverteilung der Kohlenstoff-beschichteten Siliciumpartikel erfolgte durch statische Laserstreuung unter Anwendung des Mie-Modells mit dem Messgerät Horiba LA 950 mit Ethanol als Dispergiermedium für die Kohlenstoff-beschichteten Siliciumpartikel.

Die Kohlenstoff-Beschichtung der Kohlenstoff-beschichteten Siliciumpartikel hat eine mittlere Schichtdicke im Bereich von vorzugsweise 1 bis 100 nm, besonders bevorzugt 1 bis 50 nm (Bestimmungsmethode: Raster-Elektronen-Mikroskopie (REM) und/oder Transmissions-Elektronen-Mikroskopie (TEM)).

Die Kohlenstoff-beschichteten Siliciumpartikel weisen typischerweise BET-Oberflächen auf von bevorzugt 0,1 bis 10 m²/g, besonders bevorzugt 0,3 bis 8 m²/g und am meisten bevorzugt 0,5 bis 5 m²/g (Bestimmung nach DIN ISO 9277:2003-05 mit Stickstoff) .

Die Kohlenstoff-Beschichtung kann porös sein und ist vorzugsweise unporös. Die Kohlenstoff-Beschichtung hat eine Porosität von vorzugsweise ≤ 2% und besonders bevorzugt ≤ 1% (Bestimmungsmethode der Gesamtporosität: 1 minus [Quotient aus Rohdichte (bestimmt mittels Xylol-Pyknometrie gemäß DIN 51901) und Skelettdichte (bestimmt mittels He-Pyknometrie gemäß DIN 66137-2)1).

Die Kohlenstoff-Beschichtung der Kohlenstoff-beschichteten Siliciumpartikel ist vorzugsweise undurchlässig für flüssige Medien, wie wässrige oder organische Lösungsmittel oder Lösungen, insbesondere wässrige oder organische Elektrolyte, Säuren oder Laugen.

In den Kohlenstoff-beschichteten Siliciumpartikeln sind die Siliciumpartikel teilweise oder vorzugsweise vollständig in Kohlenstoff eingebettet. Die Oberfläche der Kohlenstoff-beschichteten Siliciumpartikel besteht teilweise oder vorzugsweise vollständig aus Kohlenstoff.

Generell befinden sich die Siliciumpartikel nicht in Poren. Die Kohlenstoff-Beschichtung ist im Allgemeinen in unmittelbarem Kontakt mit der Oberfläche der Siliciumpartikel.

Die Kohlenstoff-Beschichtung ist im Allgemeinen filmartig beziehungsweise im Allgemeinen nicht partikulär oder faserartig. Im Allgemeinen enthält die Kohlenstoff-Beschichtung keine Partikel oder keine Fasern, wie Kohlenstofffasern oder Graphitpartikel.

Im Allgemeinen enthält jeder Kohlenstoff-beschichtete Siliciumpartikel einen Siliciumpartikel (Bestimmungsmethode: Raster-Elektronen-Mikroskopie (REM) und/oder Transmissions-Elektronen-Mikroskopie (TEM)).

Der Kohlenstoff der Kohlenstoff-Beschichtung wird allgemein durch erfindungsgemäße Carbonisierung erhalten. Der Kohlenstoff der Kohlenstoff-Beschichtung kann beispielsweise in amorpher Form oder vorzugsweise teilweise oder vollständig in kristalliner Form vorliegen.

Die Kohlenstoff-beschichteten Siliciumpartikel können beliebige Formen annehmen und sind bevorzugt splittrig.

Die Kohlenstoff-beschichteten Siliciumpartikel enthalten vorzugsweise 0,1 bis 8 Gew.-%, mehr bevorzugt 0,3 bis 6 Gew.-%, noch mehr bevorzugt 0,5 bis 4 Gew.-% und besonders bevorzugt 0,5 bis 3 Gew.-% Kohlenstoff. Die Kohlenstoff-beschichteten Siliciumpartikel enthalten vorzugsweise 92 bis 99,9 Gew.-%, mehr bevorzugt 94 bis 99,7 Gew.-%, noch mehr bevorzugt 96 bis 99,5 Gew.-% und besonders bevorzugt 97 bis 99,5 Gew.-% Siliciumpartikel. Die vorgenannten Angaben in Gew.-% beziehen sich jeweils auf das Gesamtgewicht der Kohlenstoff-beschichteten Siliciumpartikel.

Die Kohlenstoff-Beschichtung kann Sauerstoff-Gehalte von beispielsweise ≤ 20 Gew.-%, bevorzugt ≤ 10 Gew.-% und besonders bevorzugt ≤ 5 Gew.-% enthalten. Stickstoff kann in der Kohlenstoff-Beschichtung beispielsweise zu 0 bis 10 Gew.-% und vorzugsweise zwischen 0,05 und 5 Gew.-% enthalten sein. Stickstoff liegt hierbei vorzugsweise chemisch gebunden in Form von Heterocyclen vor, beispielsweise als Pyridin- oder Pyrrol-Einheiten (N), oder ist als Stickstoffatom enthaltende funktionelle Gruppe, beispielsweise Aminogruppen, an Kohlenstoffspezies angebunden. Neben den genannten Hauptbestandteilen können auch weitere chemische Elemente, beispielsweise in Form eines gezielten Zusatzes oder zufälliger Verunreinigung, enthalten sein: wie Li, Fe, Al, Cu, Ca, K, Na, S, Cl, Zr, Ti, Pt, Ni, Cr, Sn, Mg, Ag, Co, Zn, B, P, Sb, Pb, Ge, Bi, Seltene Erden; deren Gehalte sind bevorzugt ≤ 1 Gew.-% und besonders bevorzugt ≤ 100 ppm. Die vorgenannten Angaben in Gew.% beziehen sich jeweils auf das Gesamtgewicht der Kohlenstoff-Beschichtung.

Des Weiteren können die Kohlenstoff-beschichteten Siliciumpartikel ein oder mehrere Leitadditive enthalten, beispielsweise Graphit, Leitruß, Graphen, Graphenoxid, Graphennanoplatelets, Kohlenstoff-Nanoröhrchen oder metallische Partikel, wie Kupfer. Vorzugsweise sind keine Leitadditive enthalten.

Die Siliciumpartikel weisen volumengewichtete Partikelgrößenverteilungen mit Durchmesser-Perzentilen d₅₀ von vorzugsweise 1 bis kleiner 15 µm, besonders bevorzugt 2 bis kleiner 10 µm und am meisten bevorzugt 3 bis kleiner 8 µm auf (Bestimmung: mit dem Messgerät Horiba LA 950 wie oben für die Kohlenstoff-beschichteten Siliciumpartikel beschrieben).

Die Siliciumpartikel sind vorzugsweise nicht aggregiert und besonders bevorzugt nicht agglomeriert. Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zu Aggregaten zusammenwachsen. Aggregate oder Primärpartikel können auch Agglomerate bilden. Agglomerate sind eine lose Zusammenballung von Aggregaten oder Primärpartikeln. Agglomerate können mit typischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Aggregate und Agglomerate haben auf Grund ihrer Entstehung zwangsläufig ganz andere Kornformen als die bevorzugten Siliciumpartikel. Zur Ermittlung von Aggregation gilt für die Siliciumpartikel das diesbezüglich zu den Kohlenstoff-beschichteten Siliciumpartikeln Gesagte in analoger Weise.

Die Siliciumpartikel haben vorzugsweise splittrige Kornformen.

Siliciumpartikel können aus elementarem Silicium, einem Siliciumoxid oder einer binären, ternären oder multinären Silicium/ Metall-Legierung (mit beispielsweise Li, Na, K, Sn, Ca, Co, Ni, Cu, Cr, Ti, Al, Fe) bestehen. Bevorzugt ist elementares Silicium, insbesondere da dieses eine vorteilhaft hohe Speicherkapazität für Lithium-Ionen aufweist.

Unter elementarem Silicium ist im Allgemeinen hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids SiOₓ bevorzugt im Bereich 0 < x < 1,3. Falls die Siliciumpartikel ein Siliciumoxid mit höherer Stöchiometrie enthalten, dann befindet sich dieses vorzugsweise auf der Oberfläche der Siliciumpartikel, vorzugsweise mit einer Schichtdicke von kleiner als 10 nm.

Wenn die Siliciumpartikel mit einem Alkalimetall M legiert sind, dann liegt die Stöchiometrie der Legierung M_{y}Si bevorzugt im Bereich 0 < y < 5. Die Siliciumpartikel können gegebenenfalls prälithiiert sein. Für den Fall, dass die Siliciumpartikel mit Lithium legiert sind, liegt die Stöchiometrie der Legierung Li_{z}Si bevorzugt im Bereich 0 < z < 2,2.

Besonders bevorzugt sind Siliciumpartikel, die ≥ 80 Mol% Silicium und/oder ≤ 20 Mol% Fremdatome, ganz besonders bevorzugt ≤ 10 Mol% Fremdatome enthalten.

Die Siliciumpartikel bestehen in einer bevorzugten Ausführungsform zu vorzugsweise ≥ 96 Gew.-%, besonders bevorzugt ≥ 98 Gew.-% aus Silicium, bezogen auf das Gesamtgewicht der Siliciumpartikel. Die Siliciumpartikel enthalten vorzugsweise im Wesentlichen keinen Kohlenstoff.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene.

Bevorzugt sind polykristalline Siliciumpartikel. Polykristalline Siliciumpartikel haben Kristallitgrößen von vorzugsweise ≤ 200 nm, mehr bevorzugt ≤ 100 nm, noch mehr bevorzugt ≤ 60 nm, besonders bevorzugt ≤ 20 nm, am meisten bevorzugt ≤ 18 nm und am allermeisten bevorzugt ≤ 16 nm. Die Kristallitgröße ist vorzugsweise ≥ 3 nm, besonders bevorzugt ≥ 6 nm und am meisten bevorzugt ≥ 9 nm. Die Kristallitgröße wird bestimmt mittels Röntgenbeugungsmusteranalyse nach der Scherrer-Methode aus der vollen Halbwertsbreite des zu Si (111) gehörenden Beugungsreflexes bei 2Θ = 28,4°. Als Standard für das Röntgenbeugungsmuster von Silicium dient vorzugsweise das NIST-Röntgenbeugungsstandardreferenzmaterial SRM640C (einkristallines Silicium).

Die Siliciumpartikel können beispielsweise durch Mahlprozesse hergestellt werden, beispielsweise Nass- oder vorzugsweise Trockenmahlprozesse. Hierbei werden vorzugsweise Strahlmühlen eingesetzt, beispielsweise Gegenstrahlmühlen, oder Prallmühlen, Planetenkugelmühlen oder Rührwerkskugelmühlen. Die Nassmahlung erfolgt im Allgemeinen in einer Suspension mit organischen oder anorganischen Dispergiermedien. Hierbei können die etablierten Verfahren Anwendung finden, wie beispielsweise in der Patentanmeldung mit der Anmeldenummer DE 102015215415.7 beschrieben.

Im erfindungsgemäßen Verfahren zur Herstellung der Kohlenstoff-beschichteten Siliciumpartikel werden Trockenmischungen eingesetzt enthaltend Siliciumpartikel und erfindungsgemäße Kohlenstoff-Precursoren.

Die Trockenmischungen enthalten die Siliciumpartikel zu vorzugsweise 20 bis 99 Gew.-%, mehr bevorzugt 30 bis 98 Gew.-%, noch mehr bevorzugt 50 bis 97 Gew.-%, besonders bevorzugt 70 bis 96 Gew.-% und am meisten bevorzugt 80 bis 95 Gew.-%, bezogen auf das Gesamtgewicht der Trockenmischungen.

Vorzugsweise enthalten die polymeren Kohlenstoff-Precursoren Sauerstoff- und Stickstoffatome und gegebenenfalls Schwefel und/oder Phosphoratome. Besonders bevorzugt enthalten die polymeren Kohlenstoff-Precursoren Sauerstoff- und Stickstoffatome und keine weiteren Heteroatome.

Die polymeren Kohlenstoff-Precursoren können beispielsweise ein oder mehrere funktionelle Gruppen tragen ausgewählt aus der Gruppe umfassend Amide, Lactame, Imide, Carbamate, Urethane, Sulfate, Sulfatester, Sulfite, Sulfitester, Sulfonsäuren, Sulfonsäureester, Thioester, Phosphorsäure, Phosphorsäureester, Phosphorsäureamide, Phosphonsäure, Phosphonsäureester und Phosphonsäureamide. Die vorgenannten Säuren können auch in Form ihrer Salze vorliegen, beispielsweise Alkali-, Erdalkali- oder Ammoniumsalze. Am meisten bevorzugte funktionelle Gruppen sind Amide und Lactame.

Die polymeren Kohlenstoff-Precursoren können aliphatisch, vorzugsweise aromatisch und besonders bevorzugt heteroaromatisch sein.

Bevorzugte polymere Kohlenstoff-Precursoren sind Polyvinyllactame, Polyamide, Polyimide, Polyurethane, Polypeptide und Proteine. Besonders bevorzugt sind Polyvinyllactame. Bei Polyvinyllactamen handelt es sich vorzugsweise um Polymere von N-vinylierten Stickstoff-Heterocyclen, die eine oder mehrere Carbonylgruppen tragen, beispielsweise am Stickstoffatom vinylierte β-, γ-, δ- oder ε-Lactame, insbesondere Vinylpyrrolidon. Am meisten bevorzugt ist Polyvinylpyrrolidon.

Die polymeren Kohlenstoff-Precursoren haben Molekulargewichte Mw von vorzugsweise 200 bis 2.000.000 g/mol, mehr bevorzugt 500 bis 1.500.000 g/mol, noch mehr bevorzugt 1.000 bis 500.000 g/mol, besonders bevorzugt 1.500 bis 100.000 g/mol und am meisten bevorzugt 2.000 bis 50.000 g/mol (Bestimmungsmethode: GPC).

Die Trockenmischungen enthalten die polymeren Kohlenstoff-Precursoren zu vorzugsweise 1 bis 80 Gew.-%, mehr bevorzugt 2 bis 70 Gew.-%, noch mehr bevorzugt 3 bis 50 Gew.-%, besonders bevorzugt 4 bis 30 Gew.-% und am meisten bevorzugt 5 bis 20 Gew.-%, bezogen auf das Gesamtgewicht der Trockenmischungen.

Die Trockenmischungen können gegebenenfalls noch ein oder mehrere weitere, von den erfindungsgemäßen polymeren Kohlenstoff-Precursoren verschiedene Kohlenstoff-Precursoren enthalten. Vorzugsweise enthalten die Trockenmischungen ≥ 60 Gew.-%, mehr bevorzugt ≥ 80 Gew.-% und besonders bevorzugt ≥ 90 Gew.-% an erfindungsgemäßen polymeren Kohlenstoff-Precursoren, bezogen auf das Gesamtgewicht der insgesamt eingesetzten Kohlenstoff-Precursoren. Am meisten bevorzugt enthalten die Trockenmischungen neben erfindungsgemäßen polymeren Kohlenstoff-Precursoren keine weiteren Kohlenstoff-Precursoren. Beispiele für weitere Kohlenstoff-Precursoren sind Polyacrylnitril; Kohlenhydrate, wie Mono-, Di- und Polysaccharide; Polyvinylaromaten oder Polyaromaten, wie Polyanilin, Polystyrol; polyaromatische Kohlenwasserstoffe, wie Peche oder Teere; oder gasförmige Kohlenwasserstoffe, wie sie üblicherweise in alternativ CVD-Verfahren (Chemical-Vapor-Deposition, chemische Gasphasenabscheidung) Einsatz finden.

Des Weiteren können die Trockenmischungen ein oder mehrere Leitadditive enthalten, beispielsweise Graphit, Leitruß, Graphen, Graphenoxid, Graphennanoplatelets, Kohlenstoff-Nanoröhrchen oder metallische Partikel, wie Kupfer. Vorzugsweise sind keine Leitadditive enthalten.

Im erfindungsgemäßen Verfahren wird allgemein kein Lösungsmittel eingesetzt. Das Verfahren wird im Allgemeinen in Abwesenheit von Lösungsmittel durchgeführt. Dies schließt jedoch nicht aus, dass die eingesetzten Edukte, beispielsweise in Folge ihrer Herstellung, etwaige Restgehalte an Lösungsmittel enthalten. Vorzugsweise enthalten die Trockenmischungen, insbesondere die Siliciumpartikel und/oder die polymeren Kohlenstoff-Precursoren, ≤ 2 Gew.%, besonders bevorzugt ≤ 1 Gew.% und am meisten bevorzugt ≤ 0,5 Gew.% Lösungsmittel. Beispiele für Lösungsmittel sind anorganische Lösungsmittel, wie Wasser, oder organische Lösungsmittel, insbesondere Kohlenwasserstoffe, Ether, Ester, Stickstoff-funktionelle Lösungsmittel, Schwefel-funktionelle Lösungsmittel, Alkohole, wie Ethanol und Propanol, Benzol, Toluol, Dimethylformamid, N-Methyl-2-Pyrrolidon, N-Ethyl-2-Pyrrolidon und Dimethylsulfoxid.

Das Mischen der Siliciumpartikel und der polymeren Kohlenstoff-Precursoren kann in herkömmlicher Weise erfolgen, beispielsweise bei Temperaturen von 0 bis 50°C, vorzugsweise 15 bis 35°C. Vorzugsweise wird in oxidativer Atmosphäre gemischt, insbesondere in Gegenwart von Luft. Es können gängige Mischer, wie beispielsweise pneumatische Mischer, Freifallmischer, wie Containermischer, Konusmischer, Fassrollmischer, Rhönradmischer, Taumelmischer oder Schub- und Wurfmischer wie Trommelmischer und Schneckenmischer Einsatz finden. Vorzugsweise werden zum Mischen Mühlen eingesetzt, wie Trommelmühlen oder Kugelmühlen, insbesondere Planetenkugelmühlen oder Rührwerkskugelmühlen.

Die thermische Behandlung erfolgt in oxidativer Atmosphäre. Eine oxidative Atmosphäre kann als oxidative Gase beispielsweise Kohlendioxid, Stickoxide, Schwefeldioxid, Ozon, Peroxide, insbesondere Sauerstoff oder Wasserdampf enthalten. Die oxidative Atmosphäre enthält oxidative Gase zu vorzugsweise 1 bis 100 Vol.%, mehr bevorzugt 5 bis 80 Vol.%, noch mehr bevorzugt 10 bis 50 Vol.% und besonders bevorzugt 15 bis 30 Vol.%. In einer alternativen Ausführungsform enthält die oxidative Atmosphäre oxidative Gase zu vorzugsweise 1 bis 25 Vol.%, mehr bevorzugt 2 bis 20 Vol.% und besonders bevorzugt 5 bis 15 Vol.%. Die oxidative Atmosphäre kann auch Inertgase enthalten, wie beispielsweise Stickstoff, Edelgase oder sonstige Inertgase. Inertgase sind zu vorzugsweise ≤ 99 Vol.%, mehr bevorzugt 20 bis 95 Vol.%, besonders bevorzugt 50 bis 90 Vol.% und am meisten bevorzugt 70 bis 85 Vol.% enthalten. Die oxidative Atmosphäre kann auch Verunreinigungen oder sonstige gasförmige Komponenten enthalten, vorzugsweise zu ≤ 10 Vol.%, besonders bevorzugt ≤ 5 Vol.% und am meisten bevorzugt ≤ 1 Vol.%. Die Angaben in Vol.% beziehen sich jeweils auf das Gesamtvolumen der oxidativen Atmosphäre. Am meisten bevorzugt enthält die oxidative Atmosphäre Luft, wie Umgebungsluft oder synthetische Luft. Am allermeisten bevorzugt besteht die oxidative Atmosphäre aus Luft.

Die oxidative Atmosphäre hat einen Druck von vorzugsweise 0,1 bis 10 bar, besonders bevorzugt von 0,5 bis 5 bar und am meisten bevorzugt 0,7 bis 1,5 bar. Die oxidative Atmosphäre enthält oxidative Gase mit einem Partialdruck von vorzugsweise 0,1 bis 2.000 mbar, mehr bevorzugt 1 bis 1.000 mbar, besonders bevorzugt 10 bis 700 mbar und am meisten bevorzugt 100 bis 500 mbar.

Die Temperaturen der thermischen Behandlung sind vorzugsweise ≤ 350°C, besonders bevorzugt ≤ 300°C und am meisten bevorzugt ≤ 280°C. Die Temperaturen sind vorzugsweise ≥ 210°C, besonders bevorzugt ≥ 230°C und am meisten bevorzugt ≥ 250°C.

Die Temperaturen der thermischen Behandlung sind vorzugsweise 50 bis 300°C, mehr bevorzugt 100 bis 250°C, besonders bevorzugt 125 bis 200°C und am meisten bevorzugt 150 bis 160°C unterhalb der Zersetzungstemperatur des jeweiligen polymeren Kohlenstoff-Precursors. Die Zersetzungstemperaturen der polymeren Kohlenstoff-Precursoren sind beispielsweise auf herkömmliche Weise mittels TGA bestimmbar (thermogravimetrische Analyse; Messung in Stickstoffatmosphäre, mit einer Heizrate von 10°C/min; die Zersetzungstemperatur ergibt sich aus dem Wendepunkt der so erhaltenen Messkurve).

Bevorzugt liegt die Temperatur der thermischen Behandlung zwischen der etwaigen Schmelztemperatur und der Zersetzungstemperatur des jeweiligen polymeren Kohlenstoff-Precursors. Vorzugsweise liegen die polymeren Kohlenstoff-Precursoren während der thermischen Behandlung teilweise oder vollständig in Form einer Schmelze vor.

Die thermische Behandlung dauert vorzugsweise 10 min bis 24 h, bevorzugt 30 min bis 10 h und besonders bevorzugt 1 bis 4 h. Die Dauer der thermischen Behandlung orientiert sich beispielsweise an der im Einzelfall gewählten Temperatur oder am jeweiligen polymeren Kohlenstoff-Precursor.

Das Erwärmen der Trockenmischungen kann durch diskontinuierliche oder vorzugsweise kontinuierliche Erhöhung der Temperatur erfolgen. Zum diskontinuierlichen Erwärmen können die Trockenmischungen beispielsweise in einen vorgeheizten Ofen eingebracht werden. Beim kontinuierlichen Erwärmen kann mit einer konstanten oder variablen Heizrate, aber allgemein positiven Heizrate erwärmt werden. Die Heizrate bezeichnet das Ansteigen der Temperatur pro Zeiteinheit. Die Heizraten bis zum Erreichen der Temperatur oder während der thermischen Behandlung betragen vorzugsweise 1 bis 20°C pro Minute, mehr bevorzugt 1 bis 15°C/min, besonders bevorzugt 1 bis 10°C/min und am meisten bevorzugt 1 bis 5°C/min. Bevorzugt sind ein oder mehrere Haltestufen bei bestimmten Temperaturen, insbesondere im Bereich der vorgenannten Temperaturen der thermischen Behandlung.

Die Temperaturen, die oxidative Atmosphäre und der Druck der thermischen Behandlung sowie das Molekulargewicht Mw der polymeren Kohlenstoff-Precursoren werden vorzugsweise so gewählt, dass die jeweiligen polymeren Kohlenstoff-Precursoren unter den Bedingungen der thermischen Behandlung nicht oder höchstens anteilig verbrennen, oder sich nicht oder höchstens anteilig zersetzen, oder nicht oder höchstens anteilig carbonisieren. Die Verbrennungstemperatur, die Zersetzungstemperatur oder die Carbonisierungstemperatur der polymeren Kohlenstoff-Precursoren lassen sich beispielsweise mittels DSC (differential scanning calorimetry) oder thermogravimetrischer Analyse (TGA) auf herkömmliche Weise rasch ermitteln.

Im Allgemeinen findet während der thermischen Behandlung eine Carbonisierung der polymeren Kohlenstoff-Precursoren nicht oder nicht in wesentlichem Umfang statt. Der Anteil der polymeren Kohlenstoff-Precursoren, die während der thermischen Behandlung carbonisiert werden, ist vorzugsweise ≤ 20 Gew.-%, besonders bevorzugt ≤ 10 Gew.-% und am meisten bevorzugt ≤ 5 Gew.-%, bezogen auf das Gesamtgewicht der insgesamt eingesetzten polymeren Kohlenstoff-Precursoren.

Die thermische Behandlung der polymeren Kohlenstoff-Precursoren kann in herkömmlichen Öfen erfolgen, wie beispielsweise in Rohrofen, Glühofen, Drehrohrofen, Bandofen, Kammerofen, Retortenofen oder Wirbelschichtreaktor. Das Heizen kann konvektiv oder induktiv, mittels Mikrowellen oder Plasma erfolgen.

In einer Ausführungsform wird nach der thermischen Behandlung abgekühlt, beispielsweise auf eine Temperatur im Bereich von 10 bis 30°C, insbesondere Umgebungstemperatur. Das Abkühlen kann aktiv oder passiv, gleichmäßig oder stufenweise durchgeführt werden. Das so erhaltene Produkt kann gelagert werden und/oder nach Austausch der oxidativen Atmosphäre durch eine inerte Atmosphäre der Carbonisierung zugeführt werden.

Alternativ kann auch unmittelbar im Anschluss an die thermische Behandlung ohne Abkühlen, insbesondere ohne Abkühlen auf Raumtemperatur, vorzugsweise bei den Temperaturen der thermischen Behandlung, die oxidative Atmosphäre durch eine inerte Atmosphäre ausgetauscht und dann die Carbonisierung durchgeführt werden.

Im Zuge des Carbonisierens werden die polymeren Kohlenstoff-Precursoren allgemein in anorganischen Kohlenstoff überführt.

Als inerte Atmosphäre ist eine Stickstoff- oder Edelgas-, insbesondere Argon-Atmosphäre bevorzugt. Die inerte Atmosphäre enthält vorzugsweise ≥ 95 Vol.%, besonders bevorzugt ≥ 99 Vol.% und am meisten bevorzugt ≥ 99,9 Vol.% Stickstoff oder Edelgase. Die inerte Atmosphäre enthält vorzugsweise ≤ 5 Vol.%, besonders bevorzugt ≤ 1 Vol.% und am meisten bevorzugt ≤ 0,1 Vol.% oxidative Gase, insbesondere Sauerstoff. Die Inertgas-Atmosphäre kann gegebenenfalls zusätzlich Anteile eines reduzierenden Gases, wie Wasserstoff, enthalten. Die Inertgas-Atmosphäre kann sich statisch über dem Reaktionsmedium befinden oder in Form eines Gasflusses über die Reaktionsmischung strömen.

Die Carbonisierung erfolgt bei Temperaturen von vorzugsweise über 400 bis 1400°C, besonders bevorzugt 700 bis 1200°C und am meisten bevorzugt 900 bis 1100°C. Vorzugsweise werden die Mischungen für 30 min bis 24 h, besonders bevorzugt 1 bis 10 h und am meisten bevorzugt 2 bis 4 h bei den vorgenannten Temperaturen gehalten.

Das Erwärmen der Mischungen kann durch diskontinuierliche oder vorzugsweise kontinuierliche Erhöhung der Temperatur erfolgen. Die Heizraten zum Erreichen der Carbonisierungstemperaturen betragen vorzugsweise 1 bis 20°C pro Minute, besonders bevorzugt 2 bis 15°C/min und am meisten bevorzugt 3 bis 10°C/min. Es ist auch ein stufenweiser Prozess mit verschiedenen Zwischentemperaturen und -heizraten möglich. Nach Erreichen der Zieltemperatur wird die Reaktionsmischung üblicherweise eine gewisse Zeit bei der Temperatur gehalten oder anschließend sogleich abgekühlt. Das Abkühlen kann aktiv oder passiv, gleichmäßig oder stufenweise durchgeführt werden.

Das Carbonisieren erfolgt vorzugsweise in den gleichen, insbesondere in denselben Vorrichtungen, die auch für die thermische Behandlung verwendet werden.

Die thermische Behandlung und/oder die Carbonisierung können unter ständiger Durchmischung der Reaktionsmischung oder vorzugsweise statisch, also ohne Mischen, durchgeführt werden. Die in fester Form vorliegenden Komponenten sind vorzugsweise nicht fluidisiert. Dadurch verringert sich der technische Aufwand.

Die nach dem erfindungsgemäßen Verfahren erhaltenen Kohlenstoff-beschichteten Siliciumpartikel können unmittelbar ihrer weiteren Verwertung zugeführt werden, beispielsweise zur Herstellung von Elektrodenmaterialien, oder alternativ durch Klassierungstechniken (Sieben, Sichten) von Über- oder Unterkorn befreit werden. Vorzugsweise unterbleiben mechanische Nachbehandlungen oder Klassierung, insbesondere unterbleibt ein Mahlen.

Die Kohlenstoff-beschichteten Siliciumpartikel eignen sich beispielsweise als Silicium-basierte Aktivmaterialien für Anodenaktivmaterialien für Lithium-Ionen-Batterien.

Ein weiterer Gegenstand der Erfindung sind Verfahren zur Herstellung von Lithium-Ionen-Batterien, indem die gemäß dem erfindungsgemäßen Verfahren erhaltenen Kohlenstoff-beschichteten Siliciumpartikel bei der Herstellung von Anoden für Lithium-Ionen-Batterien als Anodenaktivmaterial eingesetzt werden. Lithium-Ionen-Batterien umfassen allgemein eine Kathode, eine Anode, einen Separator und einen Elektrolyten.

Vorzugsweise enthält die Kathode, die Anode, der Separator, der Elektrolyt und/oder ein sonstiges im Batteriegehäuse befindliches Reservoir ein oder mehrere anorganische Salze ausgewählt aus der Gruppe umfassend Alkali-, Erdalkali- und Ammonium-Salze von Nitrat (NO₃⁻), Nitrit (NO₂⁻), Azid (N₃⁻), Phosphat (PO₄³⁻), Carbonat (CO₃²⁻), Boraten und Fluorid (F⁻). Besonders bevorzugt sind anorganische Salze im Elektrolyt und/oder insbesondere in der Anode enthalten. Besonders bevorzugte anorganische Salze sind Alkali-, Erdalkali- und Ammonium-Salze von Nitrat (NO₃⁻), Nitrit (NO₂⁻), Azid (N₃⁻) , am meisten bevorzugt sind Lithiumnitrat und Lithiumnitrit. Es können auch weitere, insbesondere zusätzliche anorganische Salze enthalten sein, wie LiBOB oder LiPF₆.

Die Konzentration der anorganischen Salze im Elektrolyt ist vorzugsweise 0,01 bis 2 molar, besonders bevorzugt 0,01 bis 1 molar, noch mehr bevorzugt 0,02 bis 0,5 molar und am meisten bevorzugt 0,03 bis 0,3 molar. Die Beladung der anorganischen Salze in der Anode, in der Kathode und/oder im Separator, insbesondere in der Anode, beträgt vorzugsweise 0,01 bis 5,0 mg/cm², besonders bevorzugt 0,02 bis 2,0 mg/cm² und am meisten bevorzugt 0,1 bis 1,5 mg/cm², je bezogen auf die Fläche der Anode, der Kathode und/oder des Separators.

Die Anode, die Kathode oder der Separator enthalten vorzugsweise 0,8 bis 60 Gew.-%, besonders bevorzugt 1 bis 40 Gew.-% und am meisten bevorzugt 4 bis 20 Gew.-% an anorganischen Salzen. Diese Angaben beziehen sich im Falle der Anode auf das Trockengewicht der Anodenbeschichtung, im Falle der Kathode auf das Trockengewicht der Kathodenbeschichtung und im Falle des Separators auf das Trockengewicht des Separators.

Vorzugsweise ist das Anodenmaterial der vollständig geladenen Lithium-Ionen-Batterie nur teilweise lithiiert. Bevorzugt ist also, dass das Anodenmaterial, insbesondere die erfindungsgemäß Kohlenstoff-beschichteten Siliciumpartikel, in der vollständig geladenen Lithium-Ionen-Batterie nur teilweise lithiiert ist. Vollständig geladen bezeichnet den Zustand der Batterie, in dem das Anodenmaterial der Batterie ihre höchste Beladung an Lithium aufweist. Teilweise Lithiierung des Anodenmaterials bedeutet, dass das maximale Lithiumaufnahmevermögen der Siliciumpartikel im Anodenmaterial nicht ausgeschöpft wird. Das maximale Lithiumaufnahmevermögen der Siliciumpartikel entspricht allgemein der Formel Li_{4.4}Si und beträgt somit 4,4 Lithiumatome pro Siliciumatom. Dies entspricht einer maximalen spezifischen Kapazität von 4200 mAh pro Gramm Silicium.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Zellbalancing eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen teilweisen Lithiierung beträgt das Li/Si-Verhältnis im Anodenmaterial im vollständig geladenen Zustand der Lithium-Ionen-Batterie vorzugsweise ≤ 2,2, besonders bevorzugt ≤ 1,98 und am meisten bevorzugt ≤ 1,76. Das Li/Si-Verhältnis im Anodenmaterial im vollständig geladenen Zustand der Lithium-Ionen-Batterie ist vorzugsweise ≥ 0,22, besonders bevorzugt ≥ 0,44 und am meisten bevorzugt ≥ 0,66.

Die Kapazität des Siliciums des Anodenmaterials der Lithium-Ionen-Batterie wird vorzugsweise zu ≤ 50%, besonders bevorzugt zu ≤ 45% und am meisten bevorzugt zu ≤ 40% genutzt, bezogen auf eine Kapazität von 4200 mAh pro Gramm Silicium.

Der Lithiierungsgrad von Silicium beziehungsweise die Ausnutzung der Kapazität von Silicium für Lithium (Si-Kapazitätsnutzung α) kann beispielsweise bestimmt werden, wie in der WO17025346 auf Seite 11, Zeile 4 bis Seite 12, Zeile 25 beschrieben, insbesondere anhand der dort genannten Formel für die Si-Kapazitätsnutzung α und den ergänzenden Angaben unter den Überschriften *"*Bestimmung der Delithiierungs-Kapazität β*"* und "Bestimmung des Si-Gewichtsanteils ω_{Si}" (*"*incorporated by reference*"*).

Der Einsatz der erfindungsgemäß hergestellten Kohlenstoff-beschichteten Siliciumpartikel in Lithium-Ionen-Batterien führt überraschenderweise zu einer Verbesserung von deren Zyklenverhalten. Solche Lithium-Ionen-Batterien haben einen geringen irreversiblen Kapazitätsverlust im ersten Ladezyklus und ein stabiles elektrochemisches Verhalten mit nur geringfügigem Fading in den Folgezyklen. Mit den erfindungsgemäß Kohlenstoff-beschichteten Siliciumpartikeln kann also ein niedriger initialer Kapazitätsverlust und zudem ein niedriger kontinuierlicher Kapazitätsverlust der Lithium-Ionen-Batterien erreicht werden. Insgesamt weisen die erfindungsgemäßen Lithium-Ionen-Batterien eine sehr gute Stabilität auf. Dies bedeutet, dass auch bei einer Vielzahl an Zyklen kaum Ermüdungserscheinungen, wie beispielsweise in Folge von mechanischer Zerstörung des erfindungsgemäßen Anodenmaterials oder SEI, auftreten.

Diese Effekte lassen sich durch Additivierung der Lithium-Ionen-Batterie mit anorganischen Salzen, wie Lithiumnitrat, weiter steigern.

Da die thermische Behandlung und/oder die Carbonisierung auch statisch durchgeführt werden können, das heißt ohne Fluidisierung, Rühren oder sonstiges ständiges Durchmischen der Reaktionsmischung, kann das vorliegende Verfahren technisch einfach ausgestaltet werden. Auf spezielles Equipment kann verzichtet werden. All dies ist insbesondere bei der Skalierung des Verfahrens von großem Vorteil. Auch im Vergleich zu CVD-Verfahren ist das vorliegende Verfahren einfacher handhabbar, da keine Kohlenstoff-haltigen Gase, wie Ethylen, gehandhabt werden müssen, so dass die Sicherheitsanforderungen niedriger sind. Insgesamt ist das vorliegende Verfahren kostengünstig durchführbar, da die Reaktionsmischung durch bloßes Mischen der Ausgangsstoffe erhältlich ist und sich somit Lösungsmittel oder sonst übliche Trocknungsschritte, wie Sprühtrocknung, erübrigen.

Überraschenderweise können mit den erfindungsgemäß hergestellten Kohlenstoff-beschichteten Siliciumpartikeln Lithium-Ionen-Batterien erhalten werden, die neben dem vorgenannten vorteilhaften Zyklenverhalten zugleich noch eine hohe volumetrische Energiedichte besitzen.

Darüber hinaus haben die erfindungsgemäß hergestellten Kohlenstoff-beschichteten Siliciumpartikel vorteilhafterweise eine hohe elektrische Leitfähigkeit und eine hohe Beständigkeit gegenüber korrosiven Medien, wie beispielsweise organischen Lösungsmitteln, Säuren oder Laugen. Auch der Zellinnenwiderstand von Lithium-Ionen-Batterien kann mit erfindungsgemäßen Kohlenstoff-beschichteten Siliciumpartikeln reduziert werden.

Zudem sind die erfindungsgemäß hergestellten Kohlenstoff-beschichteten Siliciumpartikel in Wasser, insbesondere in wässrigen Tintenformulierungen für Anoden von Lithiumionen-Batterien, in überraschender Weise stabil, so dass die unter solchen Bedingungen mit herkömmlichen Siliciumpartikeln auftretende Wasserstoffentwicklung reduziert werden kann. Dies ermöglicht eine Verarbeitung ohne ein Aufschäumen der wässrigen Tintenformulierung, die Bereitstellung stabiler Elektrodenslurries und die Herstellung von besonders homogenen bzw. Gasblasen-freien Anoden. Die im erfindungsgemäßen Verfahren als Edukt eingesetzten Siliciumpartikel setzen dagegen in Wasser größere Mengen an Wasserstoff frei.

Mit aggregierten Kohlenstoff-beschichteten Siliciumpartikeln, wie sie beispielsweise beim Beschichten von Siliciumpartikeln mit Kohlenstoff unter Einsatz von Lösungsmitteln oder mit sonstigen nicht-erfindungsgemäßen Verfahren erhalten werden, können solche vorteilhaften Effekte nicht oder nicht im erfindungsgemäßen Umfang erzielt werden.

Die nachfolgenden Beispiele dienen zur weiteren Erläuterung der Erfindung.

Sofern nicht anders angegeben, wurden die nachstehenden (Vergleichs)Beispiele an Luft und bei Umgebungsdruck (1013 mbar) sowie Raumtemperatur (23°C) durchgeführt. Die nachfolgenden Methoden und Materialien kamen zum Einsatz.

### Carbonisierung:

Die Carbonisierung erfolgte mit einem 1200°C Drei-Zonen Rohrofen (TFZ 12/65/550/E301) der Fa. Carbolite GmbH unter Verwendung einer Kaskadenregelung inklusive eines Probenthermoelements Typ N. Die angegebenen Temperaturen beziehen sich auf die Innentemperatur des Rohrofens am Ort des Thermoelements. Das jeweils zu carbonisierende Ausgangsmaterial wurde in ein oder mehrere Verbrennungsschiffchen aus Quarzglas (QCS GmbH) eingewogen und in ein Arbeitsrohr aus Quarzglas eingebracht. Die für die Carbonisierungen verwendeten Einstellungen und Prozessparameter sind in den jeweiligen Beispielen angegeben.

### Klassierung/Siebung:

Die nach der Carbonsierung bzw. chemischen Gasphasenabscheidung erhaltenen C-beschichteten Si-Pulver wurden durch Nassiebung mit einer Siebmaschine AS 200 basic (Retsch GmbH) mit Wasser an Edelstahlsieben von Überkorn > 20 µm befreit. Das pulvrige Produkt wurde in Ethanol mittels Ultraschall (Hielscher UIS250V; Amplitude 80%, Cycle: 0,75; Dauer: 30 min) dispergiert (20% Feststoffgehalt) und auf den Siebturm mit einem Sieb (20 µm) aufgebracht. Die Siebung wurde mit einer unendlichen Zeitvorwahl und einer Amplitude von 50 bis 70% bei durchlaufendem Wasserstrom durchgeführt. Die unten austretende Silicium-haltige Suspension wurde über 200 nm-Nylonmembran filtriert, und der Filterrückstand im Vakuumtrockenschrank bei 100°C und 50 bis 80 mbar bis zur Massenkonstanz getrocknet.

### Rasterelektronemikroskopie (REM/ EDX):

Die mikroskopischen Untersuchungen wurden mit einem Rasterelektronenmikroskop Zeiss Ultra 55 und einem energiedispersivem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft.

### Anorganische Analytik/Elementaranalyse:

Die C-Gehalte wurden mit einem Leco CS 230 Analysator ermittelt, zur Bestimmung von O- und N-Gehalten wurde ein Leco TCH-600 Analysator eingesetzt. Die qualitative und quantitative Bestimmung von anderen Elementen in den Kohlenstoff-beschichteten Siliciumpartikeln wurden mittels ICP (inductively coupled plasma-)Emissionsspektrometrie (Optima 7300 DV, Fa. Perkin Eimer) durchgeführt. Die Proben wurden dazu in einer Mikrowelle (Microwave 3000, Fa. Anton Paar) sauer aufgeschlossen (HF/HNO₃). Die ICP-OES-Bestimmung orientiert sich an der ISO 11885 *"*Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009*"*, die zur Untersuchung saurer, wässriger Lösungen
eingesetzt wird (z.B. angesäuerte Trinkwasser-, Abwasser- und andere Wasserproben, Königswasserextrakte von Böden und Sedimenten).

### Partikelgrößenbestimmung:

Die Bestimmung der Partikelgrößenverteilung erfolgte nach ISO 13320 mittels statischer Laserstreuung mit einem Horiba LA 950. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Für die hier untersuchten C-beschichteten Si-Partikel wurden die Partikel in Ethanol dispergiert. Dazu wurde die Dispersion vor der Messung bei Bedarf 4 min in einem Hielscher Ultraschall-Laborgerät Modell UIS250v mit Sonotrode LS24d5 mit 250 W Ultraschall behandelt.

### Bestimmung des Aggregationsgrades von C-beschichteten Si-Partikeln:

Die Bestimmung erfolgt mittels Siebanalyse. Der Aggregationsgrad entspricht dem Prozentsatz der Partikel, die nach Dispersion in Ethanol bei gleichzeitiger Ultraschallbehandlung nicht durch ein Sieb mit einer Maschenweite des doppelten d90-Wertes der volumengewichteten Partikelgrößenverteilung der jeweiligen zu untersuchenden Partikel-Zusammensetzung hindurchtreten.

### Oberflächenmessung nach BET:

Die spezifische Oberfläche der Materialien wurde über Gasadsorption mit Stickstoff mit einem Gerät Sorptomatic 199090 (Porotec) oder Gerät SA-9603MP (Horiba) nach der BET-Methode gemäß DIN ISO 9277:2003-05 gemessen.

### Si-Zugänglichkeit gegenüber flüssigen Medien:

Die Bestimmung der Zugänglichkeit von Silicium in den C-beschichteten Si-Partikeln gegenüber flüssigen Medien wurde mit folgender Testmethode an Materialien mit bekanntem Silicium-Gehalt (aus Elementaranalyse) durchgeführt:
0.5 bis 0.6 g C-beschichtetes Silicium wurden mit 20 ml einer Mischung aus NaOH (4 M; H₂O) und Ethanol (1:1 vol.) zunächst mittels Ultraschall dispergiert und anschließend 120 min bei 40°C gerührt. Die Partikel wurden über 200 nm Nylonmembran filtriert, mit Wasser zum Neutral-pH gewaschen und anschließend im Trockenschrank bei 100°C / 50 bis 80 mbar getrocknet. Der Silicium-Gehalt nach der NaOH-Behandlung wurde bestimmt und mit dem Si-Gehalt vor dem Test verglichen. Die Dichtigkeit entspricht dem Quotienten aus dem Si-Gehalt der Probe in Prozent nach Laugebehandlung und dem Si-Gehalt in Prozent der unbehandelten C-beschichteten Partikel.

### Bestimmung der Pulverleitfähigkeit:

Der spezifische Widerstand der C-beschichteten Proben wurde in einem Messsystem der Fa. Keithley, 2602 System Source Meter ID 266404, bestehend aus einer Druckkammer (Stempelradius 6 mm) und einer Hydraulikeinheit (Fa. Caver, USA, Modell 3851CE-9; S/N: 130306), unter kontrolliertem Druck (bis zu 60 MPa) bestimmt.

### Beispiel 1 (Bsp. 1):

### Herstellung von Siliciumpartikeln mittels Mahlen:

Das Siliciumpulver wurde nach dem Stand der Technik durch Mahlung eines groben Si-Splitts aus der Produktion von Solarsilicium in einer Fließbettstrahlmühle (Netzsch-Condux CGS16 mit 90 m³/h Stickstoff bei 7 bar als Mahlgas) hergestellt.

Die Partikelgrößenbestimmung erfolgte in einer stark verdünnten Suspension in Ethanol.

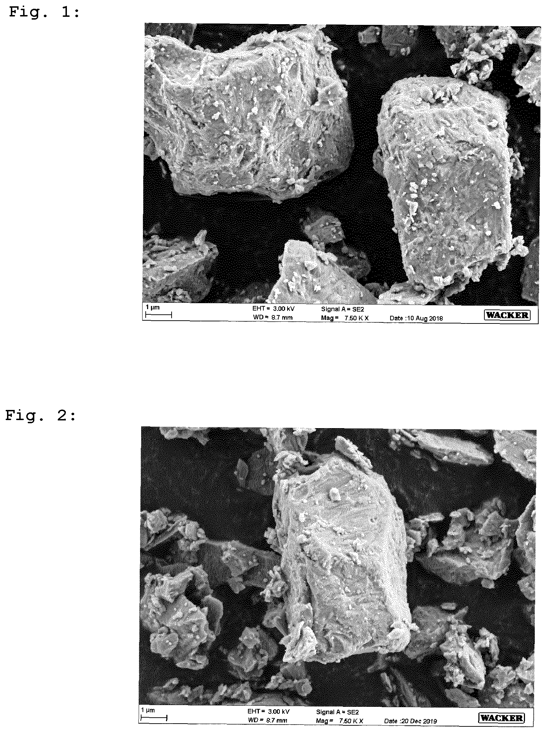

Die REM-Aufnahme (7.500fache Vergrößerung) des Siliciumpulvers in der Fig. 1 zeigt, dass die Probe aus einzelnen, nicht aggregierten, splitterförmigen Partikeln besteht.

Elementare Zusammensetzung: Si ≥ 98 Gew-%; C 0,01 Gew.-%; H < 0,01 Gew.-%; N < 0,01 Gew.-%; O 0,47 Gew-%.

Partikelgrößenverteilung: Monomodal; D₁₀: 2,19 µm, D₅₀: 4,16 µm, D₉₀: 6,78 µm; (D₉₀ - D₁₀) /D₅₀ = 1,10; (D₉₀-D₁₀) = 4, 6 µm.

Aggregationsgrad: 0%.

Spezifische Oberfläche (BET): 2,662 m²/g.

Si-Dichtigkeit:0%.

Pulverleitfähigkeit: 2,15 pS/cm.

### Beispiel 2 (Bsp. 2):

C-beschichtete Siliciumpartikel, hergestellt mit Polyvinylpyrrolidon (PVP) als C-Precursor und oxidativer thermischer Behandlung:
15,02 g des Silicium-Pulvers aus Beispiel 1 (D₅₀ = 4,16 µm) und 2,65 g Polyvinylpyrrolidon (PVP, M_{w} = 3600 g/mol) wurden für 3 h mechanisch mittels Kugelmühlen-Rollbank (Siemens/ Groschopp) bei 80 rpm gemischt.

17,27 g der so erhaltenen Mischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N unter oxidativer Atmosphäre (Luft) thermisch behandelt: Heizrate 2°C/min, Temperatur 250°C, Haltedauer 2 h.

Nach Abkühlen auf Raumtemperatur wurden 16,95 g eines grauen Pulvers erhalten (Ausbeute 98%).

Das erhaltene Produkt (16,04 g) wurde einer Carbonisierung unter Argon als Inertgas mit folgendem Temperaturprogramm unterzogen:
Heizrate 5°C/min, Temperatur 1000°C, Haltedauer 3 h, Ar-Flussrate 200 ml/min.

Nach Abkühlen auf Raumtemperatur wurden 14,49 g eines schwarzen Pulvers erhalten (Carbonisierungsausbeute 90%), welches mittels Nasssiebung von Überkorn befreit wurde.

Es wurden 14,01 g C-beschichtete Siliciumpartikel mit einer Partikelgröße von D₉₉ < 20 µm erhalten.

Fig. 2 zeigt eine REM-Aufnahme (7.500fache Vergrößerung) der erhaltenen C-beschichteten nicht aggregierten Siliciumpartikel. Elementare Zusammensetzung: Si ≥ 98 Gew.-%; C 0,9 Gew.-%; H < 0,01 Gew.-%; N 0,1 Gew.-%; O 0,6 Gew.-%.

Partikelgrößenverteilung: Monomodal; D₁₀: 2,23 µm, D₅₀: 4,79 µm, D₉₀: 7,13 µm; (D₉₀ - D₁₀)/D₅₀ = 1,02.

Aggregationsgrad: 3,3%.

Spezifische Oberfläche (BET): 2,72 m²/g.

Si-Dichtigkeit: -100% (dicht).

Pulverleitfähigkeit: 12078,19 pS/cm.

### Vergleichsbeispiel 3 (VBsp. 3):

C-beschichtete Siliciumpartikel, hergestellt mit Polyvinylpyrrolidon (PVP) als C-Precursor, aber inerter thermischer Behandlung:
15,00 g des Silicium-Pulvers aus Beispiel 1 (D₅₀ = 4,16 µm) und 2,65 g Polyvinylpyrrolidon (PVP, M_{w} = 3600 g/mol) wurden für 3 h mechanisch mittels Kugelmühlen-Rollbank (Siemens/ Groschopp) bei 80 rpm gemischt.
17,36 g der so erhaltenen Mischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N mit Argon als Inertgas thermisch behandelt und anschließend carbonisiert:
   Zuerst Heizrate 2°C/min, Temperatur 250°C, Haltedauer 2 h, Ar-Flussrate 200 ml/min;
   danach direkt weiter mit Heizrate 5°C/min, Temperatur 1000°C, Haltedauer 3 h, Ar-Flussrate 200 ml/min.

Nach dem Abkühlen wurden 14,88 g eines schwarzen Pulvers erhalten (Carbonisierungsausbeute 86%), welches mittels Nasssiebung von Überkorn befreit wurde. Es wurden 14,46 g C-beschichtete Siliciumpartikel mit einer Partikelgröße von D₉₉ < 20 µm erhalten.

Elementare Zusammensetzung: Si ≥ 98 Gew.-%; C 0,7 Gew.-%; H < 0,01 Gew.-%; N 0,03 Gew.-%; O 0,6 Gew.-%.

Partikelgrößenverteilung: Monomodal; D₁₀: 2,45 µm, D₅₀: 4,60 µm, D₉₀: 7,19 µm; (D₉₀ - D₁₀)/D₅₀ = 1,03.

Aggregationsgrad: 2,8%.

Spezifische Oberfläche (BET): 2,42 m²/g.

Si-Dichtigkeit: -100% (dicht).

Pulverleitfähigkeit: 11298,83 pS/cm.

### Vergleichsbeispiel 4 (VBsp. 4):

C-beschichtete Siliciumpartikel, hergestellt mit Pech als C-Precursor und oxidativer thermischer Behandlung: 47,60 g des Silicium-Pulvers aus Beispiel 1 (D₅₀ = 4,16 µm) und 0,96 g Pech (Petromasse ZL 250M) wurden für 3 h mechanisch mittels Kugelmühlen-Rollbank (Siemens/ Groschopp) bei 80 rpm gemischt.

48,40 g der so erhaltenen Mischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N unter oxidativer Atmosphäre (Luft) thermisch behandelt: Heizrate 2°C/min, Temperatur 350°C, Haltedauer 2 h.

Nach Abkühlen auf Raumtemperatur wurden 48,00 g eines grauen Pulvers erhalten (Ausbeute 99%).

Das erhaltene Produkt (47,50 g) wurde einer Carbonisierung unter Argon als Inertgas mit folgendem Temperaturprogramm unterzogen:
Heizrate 5°C/min, Temperatur 1000°C, Haltedauer 3 h, Ar-Flussrate 200 ml/min.

Nach Abkühlen auf Raumtemperatur wurden 46,60 g eines schwarzen Pulvers erhalten (Carbonisierungsausbeute 98%), welches mittels Nasssiebung von Überkorn befreit wurde.

Es wurden 45,80 g C-beschichtete Siliciumpartikel mit einer Partikelgröße von D₉₉ < 20 µm erhalten.

Elementare Zusammensetzung: Si ≥ 97 Gew.-%; C 0,9 Gew.-%; H 0,01 Gew.-%; N < 0.01 Gew.-%; O 0,7 Gew-%.

Partikelgrößenverteilung: Monomodal; D₁₀: 3,51 µm, D₅₀: 5,43 µm, D₉₀: 8,57 µm; (D₉₀ - D₁₀)/D₅₀ = 0,93.

Aggregationsgrad: 1,7%.

Spezifische Oberfläche (BET): 1,4 m²/g.

Si-Dichtigkeit: -100% (dicht).

Pulverleitfähigkeit: 21006,14 pS/cm.

### Vergleichsbeispiel 5 (VBsp. 5):

C-beschichtete Siliciumpartikel, hergestellt mit Polyacrylnitril (PAN) als C-Precursor und oxidativer thermischer Behandlung:
54,00 g des Silicium-Pulvers aus Beispiel 1 (D₅₀ = 4,16 µm) und 10,80 g Polyacrylnitril (PAN) wurden für 3 h mechanisch mittels Kugelmühlen-Rollbank (Siemens/Groschopp) bei 80 rpm gemischt.

64,60 g der so erhaltenen Mischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenthermoelements Typ N unter oxidativer Atmosphäre (Luft) thermisch behandelt: Heizrate 2°C/min, Temperatur 250°C, Haltedauer 2 h.

Nach Abkühlen auf Raumtemperatur wurden 63,30 g eines grauen Pulvers erhalten (Ausbeute 98%).

Das erhaltene Produkt (63,00 g) wurde einer Carbonisierung unter Argon als Inertgas mit folgendem Temperaturprogramm unterzogen:
Heizrate 5°C/min, Temperatur 1000°C, Haltedauer 3 h, Ar-Flussrate 200 ml/min.

Nach Abkühlen auf Raumtemperatur wurden 59,40 g eines schwarzen Pulvers erhalten (Carbonisierungsausbeute 94%), welches mittels Nasssiebung von Überkorn befreit wurde. Es wurden 58,04 g C-beschichtete Siliciumpartikel mit einer Partikelgröße von D₉₉ < 20 µm erhalten.

Elementare Zusammensetzung: Si ≥ 97 Gew.-%; C 0,8 Gew.-%; H < 0,01 Gew.-%; N 0,2 Gew.-%.; O 0,69 Gew.-%.

Partikelgrößenverteilung: Monomodal; D₁₀: 2,41 µm, D₅₀: 4,51 µm, D₉₀: 8, 09 µm; (D₉₀ - D₁₀)/D₅₀ = 1,26.

Aggregationsgrad: 2,3%.

Spezifische Oberfläche (BET): 1,3 m²/g.

Si-Dichtigkeit: -100% (dicht).

Pulverleitfähigkeit: 14752,73 pS/cm.

### Beispiel 6 (Bsp. 6):

Anode mit den C-beschichteten Siliciumpartikeln aus Beispiel 2 und elektrochemische Testung in einer Lithium-Ionen-Batterie: 29,71 g Polyacrylsäure (bei 85°C bis zur Gewichtskonstanz getrocknet; Sigma-Aldrich, M_{w} ~450.000 g/mol) und 756,60 g deionisiertes Wasser wurden mittels Schüttler (290 1/min) für 2,5 h bis zur vollständigen Lösung der Polyacrylsäure bewegt. Zu der Lösung wurde Lithiumhydroxid Monohydrat (Sigma-Aldrich) portionsweise hinzugegeben, bis der pH-Wert bei 7,0 lag (gemessen mit pH-Meter WTW pH 340i und Sonde SenTix RJD). Die Lösung wurde anschließend mittels Schüttler weitere 4 h durchmischt. 7,00 g der Kohlenstoff-beschichteten Siliciumpartikel aus Beispiel 2 wurden dann in 12,50 g der neutralisierten Polyacrylsäure-Lösung und 5,10 g deionisiertem Wasser mittels Dissolver bei einer Umlaufgeschwindigkeit von 4,5 m/s für 5 min und von 12 m/s für 30 min unter Kühlung bei 20°C dispergiert. Nach Zugabe von 2,50 g Graphit (Imerys, KS6L C) wurde weitere 30 min bei einer Umlaufgeschwindigkeit von 12 m/s gerührt. Nach Entgasen wurde die Dispersion mittels eines Filmziehrahmens mit 0,20 mm Spalthöhe (Erichsen, Modell 360) auf eine Kupferfolie mit Dicke von 0,03 mm (Schlenk Metallfolien, SE-Cu58) aufgebracht. Die so hergestellte Anodenbeschichtung wurde anschließend 60 min bei 50°C und 1 bar Luftdruck getrocknet.

Das mittlere Flächengewicht der trockenen Anodenbeschichtung betrug 3,20 mg/cm² und die Beschichtungsdichte 0,9 g/cm³.

Die elektrochemischen Untersuchungen wurden an einer Knopfzelle (Typ CR2032, Hohsen Corp.) in 2-Elektroden-Anordnung durchgeführt.

Die Elektrodenbeschichtung aus Beispiel 6 wurde als Gegenelektrode bzw. negative Elektrode (Dm = 15 mm) eingesetzt, eine Beschichtung auf Basis von Lithium-Nickel-Mangan-Kobaltoxid 6:2:2 mit Gehalt von 94,0 % und mittlerem Flächengewicht von 15,9 mg/cm² (bezogen von der Firma SEI Corp.) als Arbeitselektrode bzw. positive Elektrode (Dm = 15 mm) verwendet. Ein mit 60 µl Elektrolyt getränktes, Glasfaser-Filterpapier (Whatman, GD Type A/E) diente als Separator (Dm = 16 mm). Der verwendete Elektrolyt bestand aus einer 1,0-molaren Lösung von Lithiumhexafluorophosphat in einem 1:4 (v/v) Gemisch von Fluorethylencarbonat und Diethylcarbonat. Der Bau der Zelle erfolgte in einer Glovebox (< 1 ppm H₂O, O₂), der Wassergehalt in der Trockenmasse aller verwendeten Komponenten lag unterhalb von 20 ppm.

Die elektrochemische Testung wurde bei 20°C durchgeführt. Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V.

Der gewählte spezifische Strom bezog sich auf das Gewicht der Beschichtung der positiven Elektrode.

Auf Grund der Rezeptierung wurde die Lithium-Ionen-Batterie durch Zellbalancing unter Teil-Lithiierung der Anode betrieben. Die Ergebnisse der elektrochemischen Testung sind in Tabelle 1 zusammengefasst.

### Vergleichsbeispiel 7 (VBsp. 7):

Anode mit den C-beschichteten Siliciumpartikeln aus Vergleichsbeispiel 3 und elektrochemische Testung in einer Lithium-Ionen-Batterie:
Es wurde eine Lithium-Ionen-Batterie hergestellt und ausgetestet, wie oben mit Beispiel 6 beschrieben, mit dem Unterschied, dass die Kohlenstoff-beschichteten Siliciumpartikel aus Vergleichsbeispiel 3 eingesetzt wurden.

Die Ergebnisse der elektrochemischen Testung sind in Tabelle 1 zusammengefasst.

### Vergleichsbeispiel 8 (VBsp. 8):

Anode mit den C-beschichteten Siliciumpartikeln aus Vergleichsbeispiel 4 und elektrochemische Testung in einer Lithium-Ionen-Batterie:
Es wurde eine Lithium-Ionen-Batterie hergestellt und ausgetestet, wie oben mit Beispiel 6 beschrieben, mit dem Unterschied, dass die Kohlenstoff-beschichteten Siliciumpartikel aus Vergleichsbeispiel 4 eingesetzt wurden.

Die Ergebnisse der elektrochemischen Testung sind in Tabelle 1 zusammengefasst.

### Vergleichsbeispiel 9 (VBsp. 9):

Anode mit den C-beschichteten Siliciumpartikeln aus Vergleichsbeispiel 5 und elektrochemische Testung in einer Lithium-Ionen-Batterie:
Es wurde eine Lithium-Ionen-Batterie hergestellt und ausgetestet, wie oben mit Beispiel 6 beschrieben, mit dem Unterschied, dass die Kohlenstoff-beschichteten Siliciumpartikel aus Vergleichsbeispiel 5 eingesetzt wurden.

Die Ergebnisse der elektrochemischen Testung sind in Tabelle 1 zusammengefasst.

**Tabelle 1: Austestungsergebnisse der (Vergleichs-)Beispiele 6 bis 9:**

| V (Bsp) | C-Precursor | thermische Behandlung | Entladekapazität nach Zyklus 1 [mAh/cm²] | Zyklenzahl mit ≥ 80% Kapazitäts -erhalt |
|---|---|---|---|---|
| 6 | PVP | oxidative Atmosphäre | 2,32 | 325 |
| 7 | PVP | inerte Atmosphäre | 2,30 | 301 |
| 8 | Pech | oxidative Atmosphäre | 1,95 | 275 |
| 9 | PAN | oxidative Atmosphäre | 2,00 | 282 |

Die Lithium-Ionen-Batterie aus dem erfindungsgemäßen Beispiel 6 zeigte überraschenderweise im Vergleich zu den Lithium-Ionen-Batterien der Vergleichsbeispiele 7, 8 und 9 bei höherer Entladekapazität nach Zyklus 1 ein stabileres elektrochemisches Verhalten.

## Patentansprüche

1. Verfahren zur Herstellung von nicht-aggregierten Kohlenstoff-beschichteten Siliciumpartikeln,
die durchschnittliche volumengewichtete Partikeldurchmesser d₅₀ von 1 bis 15 µm haben, bestimmt mittels statischer Laserstreuung unter Anwendung des Mie-Modells mit dem Messgerät Horiba LA 950 mit Ethanol als Dispergiermedium, sowie ≤ 10 Gew.-% Kohlenstoff und ≥ 90 Gew.-% Silicium enthalten, je bezogen auf das Gesamtgewicht der Kohlenstoff-beschichteten Siliciumpartikel, indem
Trockenmischungen enthaltend Siliciumpartikel und ein oder mehrere polymere Kohlenstoff-Precursoren, die ein oder mehrere funktionelle Gruppen enthalten ausgewählt aus der Gruppe umfassend Amide, Lactame, Imide, Carbamate, Urethane, Sulfate, Sulfatester, Sulfite, Sulfitester, Sulfonsäuren, Sulfonsäureester, Thioester, Phosphorsäure, Phosphorsäureester, Phosphorsäureamide, Phosphonsäure, Phosphonsäureester und Phosphonsäureamide,
in oxidativer Atmosphäre bei einer Temperatur von 200 bis 400°C behandelt werden (thermische Behandlung), und anschließend unter inerter Atmosphäre carbonisiert wird.

2. Verfahren zur Herstellung von nicht-aggregierten Kohlenstoff-beschichteten Siliciumpartikeln gemäß Anspruch 1, **dadurch gekennzeichnet, dass** ein oder mehrere polymere Kohlenstoff-Precursoren ausgewählt werden aus der Gruppe umfassend Polyvinyllactame, Polyamide, Polyimide, Polyurethane, Polypeptide, Proteine und Vinylpyrrolidon.

3. Verfahren zur Herstellung von nicht-aggregierten Kohlenstoff-beschichteten Siliciumpartikeln gemäß Anspruch 1 oder 2, **dadurch gekennzeichnet, dass** ein oder mehrere polymere Kohlenstoff-Precursoren Polyvinyllactame sind .

4. Verfahren zur Herstellung von nicht-aggregierten Kohlenstoff-beschichteten Siliciumpartikeln gemäß Anspruch 1 bis 3, **dadurch gekennzeichnet, dass** die polymeren Kohlenstoff-Precursoren Molekulargewichte Mw von 200 bis 2.000.000 g/mol, bestimmt mittels GPC, haben.

5. Verfahren zur Herstellung von nicht-aggregierten Kohlenstoff-beschichteten Siliciumpartikeln gemäß Anspruch 1 bis 4, **dadurch gekennzeichnet, dass** die Trockenmischungen die polymeren Kohlenstoff-Precursoren zu 1 bis 80 Gew.-% enthalten, bezogen auf das Gesamtgewicht der Trockenmischungen.

6. Verfahren zur Herstellung von nicht-aggregierten Kohlenstoff-beschichteten Siliciumpartikeln gemäß Anspruch 1 bis 5, **dadurch gekennzeichnet, dass** die oxidative Atmosphäre ein oder mehrere oxidative Gase ausgewählt aus der Gruppe umfassend Sauerstoff, Kohlendioxid, Stickoxide, Schwefeldioxid, Ozon, Peroxide und Wasserdampf enthält.

7. Verfahren zur Herstellung von nicht-aggregierten Kohlenstoff-beschichteten Siliciumpartikeln gemäß Anspruch 1 bis 6, **dadurch gekennzeichnet, dass** die oxidative Atmosphäre Luft enthält.

8. Verfahren zur Herstellung von nicht-aggregierten Kohlenstoff-beschichteten Siliciumpartikeln gemäß Anspruch 1 bis 7, **dadurch gekennzeichnet, dass** die Siliciumpartikel volumengewichtete Partikelgrößenverteilungen mit Durchmesser-Perzentilen d₅₀ von 1 bis kleiner 15 µm aufweisen.

9. Verfahren zur Herstellung von nicht-aggregierten Kohlenstoff-beschichteten Siliciumpartikeln gemäß Anspruch 1 bis 8, **dadurch gekennzeichnet, dass** die Carbonisierung bei Temperaturen von über 400 bis 1400°C erfolgt.

10. Verfahren zur Herstellung von nicht-aggregierten Kohlenstoff-beschichteten Siliciumpartikeln gemäß Anspruch 1 bis 9, **dadurch gekennzeichnet, dass** die Kohlenstoff-beschichteten Siliciumpartikel einen Aggregationsgrad von ≤ 40% aufweisen (Bestimmung mittels Siebanalyse).

11. Verfahren zur Herstellung von nicht-aggregierten Kohlenstoff-beschichteten Siliciumpartikeln gemäß Anspruch 1 bis 10, **dadurch gekennzeichnet, dass** die Kohlenstoff-Beschichtung der Kohlenstoff-beschichteten Siliciumpartikel eine mittlere Schichtdicke im Bereich von 1 bis 100 nm hat.

12. Verfahren zur Herstellung von nicht-aggregierten Kohlenstoff-beschichteten Siliciumpartikeln gemäß Anspruch 1 bis 11, **dadurch gekennzeichnet, dass** die Differenz aus der volumengewichteten Partikelgrößenverteilung d₅₀ der Kohlenstoff-beschichteten Siliciumpartikel und der volumengewichteten Partikelgrößenverteilung d₅₀ der als Edukt zur Herstellung der Kohlenstoff-beschichteten Siliciumpartikel eingesetzten Siliciumpartikel ≤ 5 µm beträgt.

13. Nicht-aggregierte Kohlenstoff-beschichtete Siliciumpartikel, die durchschnittliche volumengewichtete Partikeldurchmesser d₅₀ von 1 bis 15 µm haben, bestimmt mittels statischer Laserstreuung unter Anwendung des Mie-Modells mit dem Messgerät Horiba LA 950 mit Ethanol als Dispergiermedium, und ≤ 10 Gew.-% Kohlenstoff und ≥ 90 Gew.-% Silicium enthalten, je bezogen auf das Gesamtgewicht der Kohlenstoff-beschichteten Siliciumpartikel, erhältlich nach den Verfahren gemäß Anspruch 1 bis 12.

14. Verfahren zur Herstellung von Lithium-Ionen-Batterien, in denen die aus den Verfahren der Ansprüche 1 bis 12 erhaltenen Kohlenstoff-beschichteten Siliciumpartikel als Anodenaktivmaterial für Anoden eingesetzt werden.

## Claims

1. Process for producing nonaggregated carbon-coated silicon particles,
having average volume-weighted particle diameters d₅₀ of 1 to 15 µm, determined by static laser scattering using the Mie model with a Horiba LA 950 instrument and with ethanol as dispersion medium, and containing ≤ 10% by weight of carbon and ≥ 90% by weight of silicon, each based on the total weight of the carbon-coated silicon particles, by
treating dry mixtures comprising silicon particles and one or more polymeric carbon precursors containing one or more functional groups selected from the group comprising amides, lactams, imides, carbamates, urethanes, sulfates, sulfate esters, sulfites, sulfite esters, sulfonic acids, sulfonic esters, thioesters, phosphoric acid, phosphoric esters, phosphoric acid amides, phosphonic acid, phosphonic esters, and phosphonic acid amides,
in an oxidative atmosphere at a temperature of 200 to 400°C (thermal treatment) and
then carbonizing this in an inert atmosphere.

2. Process for producing nonaggregated carbon-coated silicon particles according to Claim 1, **characterized in that** one or more polymeric carbon precursors are selected from the group comprising polyvinyl lactams, polyamides, polyimides, polyurethanes, polypeptides, proteins, and vinylpyrrolidone.

3. Process for producing nonaggregated carbon-coated silicon particles according to Claim 1 or 2, **characterized in that** one or more polymeric carbon precursors are polyvinyl lactams.

4. Process for producing nonaggregated carbon-coated silicon particles according to Claims 1 to 3, **characterized in that** the polymeric carbon precursors have molecular weights Mw of 200 to 2 000 000 g/mol, determined by GPC.

5. Process for producing nonaggregated carbon-coated silicon particles according to Claims 1 to 4, **characterized in that** the dry mixtures contain the polymeric carbon precursors to an extent of 1% to 80% by weight based on the total weight of the dry mixtures.

6. Process for producing nonaggregated carbon-coated silicon particles according to Claims 1 to 5, **characterized in that** the oxidative atmosphere comprises one or more oxidative gases selected from the group comprising oxygen, carbon dioxide, nitrogen oxides, sulfur dioxide, ozone, peroxides, and water vapour.

7. Process for producing nonaggregated carbon-coated silicon particles according to Claims 1 to 6, **characterized in that** the oxidative atmosphere comprises air.

8. Process for producing nonaggregated carbon-coated silicon particles according to Claims 1 to 7, **characterized in that** the silicon particles have volume-weighted particle size distributions having diameter percentiles d₅₀ of 1 to less than 15 µm.

9. Process for producing nonaggregated carbon-coated silicon particles according to Claims 1 to 8, **characterized in that** the carbonization takes place at temperatures of above 400 to 1400°C.

10. Process for producing nonaggregated carbon-coated silicon particles according to Claims 1 to 9, **characterized in that** the carbon-coated silicon particles have a degree of aggregation of ≤ 40% (determination by sieve analysis).

11. Process for producing nonaggregated carbon-coated silicon particles according to Claims 1 to 10, **characterized in that** the carbon coating of the carbon-coated silicon particles has an average layer thickness within the range from 1 to 100 nm.

12. Process for producing nonaggregated carbon-coated silicon particles according to Claims 1 to 11, **characterized in that** the difference between the volume-weighted particle size distribution d₅₀ of the carbon-coated silicon particles and the volume-weighted particle size distribution d₅₀ of the silicon particles used as starting material for the production of the carbon-coated silicon particles is ≤ 5 µm.

13. Nonaggregated carbon-coated silicon particles having an average volume-weighted particle diameter d₅₀ of 1 to 15 µm, determined by static laser scattering using the Mie model with a Horiba LA 950 instrument and with ethanol as dispersion medium, and containing ≤ 10% by weight of carbon and ≥ 90% by weight of silicon, each based on the total weight of the carbon-coated silicon particles obtainable by the processes according to Claims 1 to 12.

14. Processes for producing lithium-ion batteries in which the carbon-coated silicon particles obtained by the processes of Claims 1 to 12 are used as anode active material for anodes.

## Revendications

1. Procédé de fabrication de particules de silicium non agrégées revêtues de carbone, qui ont une granulométrie moyenne en volume d₅₀ de 1 à 15 µm, déterminée par diffraction laser statique par utilisation du modèle de Mie avec l'appareil de mesure Horiba LA 950, avec de l'éthanol comme milieu de dispersion, et qui contiennent ≤ 10 % en poids de carbone et ≥ 90 % en poids de silicium, dans chaque cas par rapport au poids total des particules de silicium revêtues de carbone,
dans lequel
on traite (traitement thermique) dans une atmosphère oxydante à une température de 200 à 400 °C des mélanges secs contenant des particules de silicium et un ou plusieurs précurseurs de carbone polymères, qui contiennent un ou plusieurs groupes fonctionnels choisis dans le groupe comprenant les amides, les lactames, les imides, les carbamates, les uréthanes, les sulfates, les estersulfates, les sulfites, les estersulfites, les acides sulfoniques, les esters des acides sulfoniques, les thioesters, l'acide phosphorique, les esters de l'acide phosphorique, les phosphoramides, l'acide phosphonique, les esters de l'acide phosphonique et les phosphonamides, puis on les carbonise sous atmosphère inerte.

2. Procédé de fabrication de particules de silicium non agrégées revêtues de carbone selon la revendication 1, **caractérisé en ce qu'**un ou plusieurs précurseurs de carbone polymères sont choisis dans le groupe comprenant les polyvinyllactames, les polyamides, les polyimides, les polyuréthanes, les polypeptides, les protéines et la vinylpyrrolidone.

3. Procédé de fabrication de particules de silicium non agrégées revêtues de carbone selon la revendication 1 ou 2, **caractérisé en ce qu'**un ou plusieurs précurseurs de carbone polymères sont des polyvinyllactames.

4. Procédé de fabrication de particules de silicium non agrégées revêtues de carbone selon les revendications 1 à 3, **caractérisé en ce que** la masse moléculaire Mw des précurseurs de carbone polymères est de 200 à 2 000 000 g/mol, déterminée par CPG.

5. Procédé de fabrication de particules de silicium non agrégées revêtues de carbone selon les revendications 1 à 4, **caractérisé en ce que** les mélanges secs contiennent les précurseurs de carbone polymères en une quantité de 1 à 80 % en poids par rapport au poids total des mélanges secs.

6. Procédé de fabrication de particules de silicium non agrégées revêtues de carbone selon les revendications 1 à 5, **caractérisé en ce que** l'atmosphère oxydante contient un ou plusieurs gaz oxydants choisis dans le groupe comprenant l'oxygène, le dioxyde de carbone, les oxydes d'azote, le dioxyde de soufre, l'ozone, les peroxydes et la vapeur d'eau.

7. Procédé de fabrication de particules de silicium non agrégées revêtues de carbone selon les revendications 1 à 6, **caractérisé en ce que** l'atmosphère oxydante contient de l'air.

8. Procédé de fabrication de particules de silicium non agrégées revêtues de carbone selon les revendications 1 à 7, **caractérisé en ce que** les particules de silicium présentent une distribution granulométrique en volume correspondant à des percentiles de diamètre d₅₀ de 1 à moins de 15 µm.

9. Procédé de fabrication de particules de silicium non agrégées revêtues de carbone selon les revendications 1 à 8, **caractérisé en ce que** la carbonisation a lieu à des températures supérieures à 400 et jusqu'à 1 400 °C.

10. Procédé de fabrication de particules de silicium non agrégées revêtues de carbone selon les revendications 1 à 9, **caractérisé en ce que** les particules de silicium revêtues de carbone présentent un degré d'agrégation ≤ 40 % (détermination par analyse granulométrique).

11. Procédé de fabrication de particules de silicium non agrégées revêtues de carbone selon les revendications 1 à 10, **caractérisé en ce que** le revêtement de carbone des particules de silicium revêtues de carbone a une épaisseur moyenne de couche dans la plage de 1 à 100 nm.

12. Procédé de fabrication de particules de silicium non agrégées revêtues de carbone selon les revendications 1 à 11, **caractérisé en ce que** la différence entre la distribution granulométrique en volume d₅₀ des particules de silicium revêtues de silicium et la distribution granulométrique en volume d₅₀ des particules de silicium utilisées comme matières de départ pour la fabrication des particules de silicium revêtues de carbone, est < 5 µm.

13. Particules de silicium non agrégées revêtues de carbone, qui ont une granulométrie moyenne en volume d₅₀ de 1 à 15 µm, déterminée par diffraction laser statique par utilisation du modèle de Mie avec l'appareil de mesure Horiba LA 950 avec de l'éthanol comme milieu de dispersion, et contiennent ≤ 10 % en poids de carbone et > 90 % en poids de silicium, dans chaque cas par rapport au poids total des particules de silicium revêtues de carbone, pouvant être obtenues par le procédé selon les revendications 1 à 12.

14. Procédé de fabrication de batteries lithium-ions, dans lequel on utilise comme matière active d'anode les particules de silicium revêtues de carbone obtenues par le procédé des revendications 1 à 12.
